# EUROPÄISCHE PATENTSCHRIFT

(11) **EP 2 176 449 B1**
(45) Veröffentlichungstag und Bekanntmachung des Hinweises auf die Patenterteilung: **24.07.2013**
(21) Anmeldenummer: 08784396.7
(22) Anmeldetag: 08.08.2008
(51) Int. Cl.: C25D 15/00, F16J 9/26, C25D 5/18

(54) **HARTCHROMSCHICHT, BESCHICHTETES SUBSTRAT UND TRIBOLOGISCHES SYSTEM**
HARD CHROMIUM LAYER, COATED SUBSTRATE AND TRIBOLOGICAL SYSTEM
COUCHE DE CHROME DUR, SUBSTRAT REVÊTU ET SYSTÈME TRIBOLOGIQUE

(30) Priorität: 10.08.2007 DE 102007037778
(43) Veröffentlichungstag der Anmeldung: 21.04.2010
(73) Patentinhaber: MAHLE International GmbH, 70376 Stuttgart (DE)
(72) Erfinder: RAIBLE, Monika, 71686 Remseck (DE); MAIER, Kurt, 71229 Leonberg (DE)
(74) Vertreter: Pohle, Reinhard
(86) Internationale Anmeldenummer: PCT/DE2008/001311
(87) Internationale Veröffentlichungsnummer: WO 2009/021494

(56) Entgegenhaltungen:
- EP-A- 0 217 126
- EP-A- 0 668 375
- DE-A1- 19 931 829
- JP-A- 2004 116 707

## Beschreibung

Die vorliegende Erfindung betrifft ein tribologisches System aus einem Grundkörper und einem Gegenkörper. Die vorliegende Erfindung betrifft ferner einen Gegenkörper für ein solches tribologisches System, mit einer Hartchromschicht, welche durch galvanische Abscheidung aus einem sechswertigen Chrom enthaltenden Elektrolyten gebildet ist und welche Risse aufweist, in die Hartstoffpartikel eingelagert sind.

Ein gattungsgemäßer Gegenkörper mit einer solchen Hartchromschicht ist aus der DE 199 31 829 A1 bekannt. Die DE 199 31 829 A1 bezieht sich auf mit einer solchen Hartchromschicht beschichtete Kolbenringe, die in einem tribologischen System mit Zylinderlaufflächen in Kraftfahrzeugmotoren zusammenwirken. Die dort offenbarte Hartchromschicht enthält als Hartstoffpartikel Diamant-partikel mit einer Größe im Bereich von 0,25 bis 0,5 µm. In der Praxis beobachtet man bei der Verwendung derartiger Hartchromschichten zwar einen vergleichsweise geringen Verschleiß am Kolbenring, jedoch einen erhöhten Verschleiß an der Zylinderlauffläche. Ferner stellte es sich heraus, dass die Brandspursicherheit wider Erwarten nicht verbessert werden konnte.

Im Rahmen der vorliegenden Offenbarung wird unter dem Begriff "Brandspuren" Oberflächenveränderungen verstanden, die durch eine hohe thermische Belastung der Oberfläche verursacht sind. Insbesondere können dunkle Verfärbungen auf der Ringlauffläche beobachtet werden, die in den meisten Fällen nach relativ kurzen Laufzeiten in neuen Motoren auftreten. Diese Brandspuren sind Vorläufer von Ringfressem. Sie äußern sich zuerst im Auftreten von Makrorissen in der Hartchromschicht. Für einen in der Praxis sicheren Motorbetrieb ist es jedoch sehr wichtig, Motor und Komponenten so auszulegen, dass auch unter widrigen Betriebsbedingungen das Auftreten von Brandspuren möglichst vermieden wird.

Ein Substrat mit einer derartigen Hartchromschicht ist ferner aus der EP 0 217 126 A1 bekannt. In die dort beschriebenen Hartchromschichten sind Siliziumcarbid-Partikel eingelagert. Sie dienen zur Beschichtung des ersten Kompressionsrings in Dieselmotoren. Bei modernen, hoch belasteten Dieselmotoren ist mit derartigen Hartchromschichten allerdings eine ausreichend hohe Brandspursicherheit nicht mehr gewährleistet. Ferner tritt nach längeren Laufzeiten ein spürbarer Schichtverschleiß auf, der zu einer Verringerung des Außendurchmessers des Kolbenringes führt. Dadurch entsteht ein größerer Spalt an den Stoßenden des Kolbenringes, der zu erhöhtem Ölverbrauch und erhöhter Durchblasemenge führt. Beide Effekte erhöhen die durch den Motor verursachte Umweltbelastung und sind daher unerwünscht.

Der vorliegenden Erfindung liegt die Aufgabe zugrunde, eine gattungsgemäße Hartchromschicht so zu optimieren, dass die Verschleißbeständigkeit des die Hartchromschicht enthaltenden tribologischen Systems verbessert wird. Insbesondere soll die Verschleißbeständigkeit der auf einem Kolbenring aufgebrachten Hartchromschicht weiter optimiert und zugleich der Verschleiß am korrespondierenden Zylinder reduziert werden. Darüber hinaus soll auch die Brandspursicherheit verbessert werden.

Die Lösung besteht in einem tribologischen System mit den Merkmalen des Patentanspruchs 1. Erfindungsgemäß ist vorgesehen, dass der Grundkörper aus einem auf Eisen basierenden Material besteht und dass der Gegenkörper eine Hartchromschicht aufweist, wobei die Hartstoffpartikel aus kubischem Bornitrid gebildet sind und eine mittlere Partikelgröße von 0,1 bis 0,3 µm aufweisen.

Gegenstand der vorliegenden Erfindung ist ferner ein mit der erfindungsgemäßen Hartchromschicht versehener Gegenkörper.

Für den Fachmann völlig überraschend hat sich herausgestellt, dass in dem erfindungsgemäßen tribologischen System bzw. mit dem erfindungsgemäßen Gegenkörper nicht nur die Brandspursicherheit deutlich verbessert wird, sondern auch die Verschleißwerte sowohl am Grundkörper als auch am Gegenkörper des tribologischen Systems (also bspw. sowohl am Zylinder als auch am Kolbenring) reduziert werden.

Kubisches Bornitrid hat eine Knoop-Härte von 4.500 und eine Dichte von 3,48 g/cm³. Es ist thermisch bis über 1.200°C beständig. Damit ist die thermische Beständigkeit besser als die von Diamanten, welche dazu neigen, unter thermischer Belastung Kohlenstoff abzugeben. Dies wurde bisher als Vorteil gesehen, da damit eine zusätzliche Feststoffschmierung verbunden sein sollte. Erstaunlicherweise ist die höhere thermische Beständigkeit von kubischem Bornitrid offensichtlich der Grund für die verbesserte Brandspursicherheit bei erfindungsgemäßen tribologischen Systemen mit einer derartigen Hartchromschicht.

Die Partikelgröße der Hartstoffpartikel aus kubischem Bornitrid ergibt sich aus dem Umstand, dass Partikel, die im Mittel größer als 1 µm sind, zu groß sind, um sich in die in der Hartchromschicht gebildeten Risse einlagern zu können. Außerdem tragen große Hartstoffpartikel zu einem größeren Verschleiß im tribologischen System bei. Partikel, die im Mittel kleiner als 0,1 µm sind, leisten keinen Beitrag zur Verbesserung von Verschleißbeständigkeit oder Brandspursicherheit.

Vorteilhafte Weiterbildungen ergeben sich aus den Unteransprüchen.

In einer vorteilhaften Weiterbildung beträgt die mittlere Partikelgröße der Hartstoffpartikel 0,3 µm. Damit können die Verschleißbeständigkeit und die Brandspursicherheit weiter optimiert werden.

Die Hartchromschicht kann, bezogen auf die gesamte Schicht, 0,5 bis 5,0 Gew.-%, bevorzugt 1,0 bis 3,0 Gew.-% Hartstoffpartikel enthalten, um eine besonders gute Verschleißbeständigkeit und Brandspursicherheit zu erzielen.

Die Hartchromschicht besteht bevorzugt aus einer Abfolge von Einzellagen. Dadurch wird eine gleichmäßige Verteilung der Hartstoffpartikel erreicht. Zweckmäßig ist eine Dicke der Einzellagen von jeweils 10 µm bis 20 µm, bevorzugt 12 µm bis 16 µm, besonders bevorzugt 14 µm. Die Zahl der Einzellagen ergibt sich dann aus der gewählten Gesamtschichtdicke.

Die gesamte Schichtdicke der Hartchromschicht kann nach der galvanischen Abscheidung 100 µm bis 200 µm, bevorzugt 130 µm bis 180 µm betragen. Die Schichtdicke sollte groß genug sein, um eine abschließende Bearbeitung, bspw. durch Schleifen, zu gestatten. Die fertig bearbeitete Hartchromschicht kann bspw. eine Schichtdicke von 50 µm bis 150 µm, bevorzugt 80 µm bis 120 µm aufweisen.

Die erfindungsgemäße Hartchromschicht ist für alle tribologischen Systeme geeignet. Als besonders großer Vorteil der erfindungsgemäßen Hartchromschicht hat sich hierbei gezeigt, dass sie in einem tribologischen System mit zahlreichen Werkstoffen auf der Basis von Eisen kombiniert werden kann. Dazu zählen nicht nur Werkstoffe auf der Basis von lamelliertem Gusseisen, die als Zylinderwerkstoff üblich sind. Die erfindungsgemäße Hartchromschicht kann bspw. auch mit Werkstoffen aus vermicularem oder globulitischem Gusseisen sowie mit Werkstoffen auf der Basis von Stahl kombiniert werden. In der praktischen Anwendung im tribologischen System aus Kolbenring und Zylinder wird damit das Werkstoffspektrum für die Zylinder wesentlich erweitert.

Ein Ausführungsbeispiel der vorliegenden Erfindung wird nun näher erläutert.

Als Substrate wurden serienmäßige Kolbenringe aus Gusseisen mittels galvanischer Beschichtung erfindungsgemäß mit der Hartchromschicht versehen. Dabei wurde nach dem in der EP 0 217 126 A1 angegebenen Verfahren vorgegangen, wobei der Elektrolyt mit Partikeln aus kubischem Bomitrid mit einer mittleren Partikelgröße von 0,3 µm versetzt wurde. Die Partikel aus kubischem Bornitrid wurden während des Beschichtungsvorgangs durch Rühren kontinuierlich in der Schwebe gehalten. Die Elektrolyttemperatur betrug 55°C.

Es wurde die folgende Elektrolytzusammensetzung verwendet:

| | |
|---|---|
| Chromsäure (CrO₃) | 300 g/l |
| Schwefelsäure | 3 g/l |
| Kaliumfluorid | 1 g/l |
| Methansulfonsäure | 4 g/l |
| Kubisches Bomitrid | 20 g/l |

Die Hartchromschicht wurde aus einer Abfolge von Einzellagen aufgebaut. Jede Einzellage wurde bei einer Stromdichte von 120 A/dm² und einer Beschichtungszeit von 12 min abgeschieden, wobei die Substrate kathodisch geschaltet waren. Danach wurden die Substrate anodisch geschaltet und bei einer Stromdichte von 60 A/dm² für 90 s geätzt. Dabei wurden die in der Einzellage natürlich aufgetretenen Risse aufgeweitet. Die im Elektrolyt dispergierten Hartstoffpartikel aus kubischem Bomitrid lagerten sich in den Rissen ein.

Die beschriebenen Schritte aus Beschichten und Ätzen wurden 14mal wiederholt. Anschließend wurde eine abschließende Beschichtungslage ohne anschließenden Ätzschritt aufgebracht. Die Gesamtschichtdicke betrug etwa 180 µm im Abscheidezustand, d.h. unmittelbar nach Beendigung der galvanischen Abscheidung.

Die so beschichteten Kolbenringe wurden an ihrer Lauffläche in an sich bekannter Weise geschliffen. Die Schichtdicke der Hartchromschicht betrug nach dem Schleifen etwa 120 µm.

Die Verschleißbeständigkeit der Hartchromschicht wurde im Vergleich zu im Stand der Technik bekannten Hartchromschichten mit eingelagerten Hartstoffpartikeln ähnlicher Größe, nämlich Aluminiumoxid-Partikeln (Version A, Version B) einerseits und Diamant-Partikeln andererseits, verglichen. Dazu wurde ein übliches Tribometer eingesetzt, welches einen reversierenden Gleitringverschleiß erzeugt. Als Prüfteile kamen ein Segment eines erfindungsgemäß beschichteten Kolbenrings sowie ein Segment aus einem korrespondierenden gehonten Zylinder aus lamellarem Gusseisen zum Einsatz. Mit dieser Anordnung wurde die Bewegung des Kolbenrings im Zylinder, und zwar im verschleißrelevanten Bereich des oberen Umkehrpunkts, abgebildet. Dementsprechend wurden die Prüfbedingungen so gewählt, dass bei langsamer Bewegung und geringstem Schmierölangebot eine hohe Last und damit eine hohe Flächenpressung auf die Versuchsanordnung wirkten, entsprechend dem auf dem Ring bei Motorbetrieb lastenden Gasdruck. Die Prüfbedingungen waren im Einzelnen:

| | |
|---|---|
| Testdauer: | 12 h |
| Last: | 1.200 N |
| Flächenpressung: | 57 N/mm² |
| Hub: | 4 mm |
| Geschwindigkeit: | 1,33 m/min |
| Frequenz: | 5 Hz |
| Schmierung: | 0,036 g alle 2 Stunden |
| Öl: | Motoröl 5 W 40 |
| Temperatur | 20°C |

Die Versuchsergebnisse sind in Tabelle 1 zusammengefasst.

**Tabelle 1**

| Verwendete Hartchromschicht | Verschleiß am Ring [µm] | Verschleiß am Zylinder [µm] | Reibungskoeffizient |
|---|---|---|---|
| **Ausführungsbeispiel** | **0,4** | **0,8** | **0,09 - 0,13** |
| Al₂O₃-Partikel Version A | 1,2 | 5,8 | 0,08 - 0,15 |
| Al₂O₃-Partikel Version B | 1,3 | 2,8 | 0,06 - 0,16 |
| Diamant-Partikel | 0,5 | 1,4 | 0,06 - 0,11 |

Diese Ergebnisse zeigen deutlich, dass die erfindungsgemäße Hartchromschicht mit eingelagerten Hartstoffpartikeln aus kubischem Bomitrid den niedrigsten Verschleiß, und zwar sowohl am Kolbenring als auch am Zylinder, aufweist.

Die Brandspursicherheit wurde in einem speziellen Motortest in einem Vierzylinder-Turbodieselmotor geprüft. Als Zylinderwerkstoff kam lamellares Gusseisen zum Einsatz. Die Versuchsbedingungen waren darauf ausgelegt, die Oberflächentemperatur an der Lauffläche des Kolbenrings gegenüber dem Serienzustand des Motors so zu erhöhen, dass das Entstehen von Brandspuren gefördert wird. Um dies zu erreichen, wurden einige Bauteile des Motors gegenüber dem Serienzustand geometrisch modifiziert, und die Betriebsmitteltemperaturen des Motors wurden künstlich erhöht. Dadurch gelang es, bereits nach kurzen Laufzeiten Brandspuren reproduzierbar zu erzeugen. Die Brandspurbeständigkeit wurde visuell beurteilt.

Die Versuchsergebnisse sind in Tabelle 2 zusammengefasst.

**Tabelle 2**

| Verwendete Hartchromschicht | Zylinder 1 | Zylinder 2 | Zylinder 3t | Zylinder 4 |
|---|---|---|---|---|
| **Ausführungsbeispiel** | **Keine Brandspuren** | **Keine Brandspuren** | **Leichte Brandspuren** | **Keine Brandspuren** |
| Al₂O₃-Partikel | **Keine Brandspuren** | **Leichte Brandspuren** | **Keine Brandspuren** | **Starke Brandspuren** |
| Diamant-Partikel | **Keine Brandspuren** | **Leichte Brandspuren** | **Leichte Brandspuren** | **Starke Brandspuren** |

Die Zylinder 3 und 4 zeigen in diesem Versuch am stärksten die Bildung von Brandspuren, weil sie die höchsten Temperaturen aufweisen. Die Versuchsergebnisse zeigen deutlich, dass das erfindungsgemäße tribologische System bzw. der erfindungsgemäß beschichtete Kolbenring mit eingelagerten Hartstoffpartikeln aus kubischem Bornitrid gegenüber den Vergleichsbeispielen eine deutlich verbesserte Brandspursicherheit erzeugt.

## Patentansprüche

1. Tribologisches System aus einem Grundkörper und einem Gegenkörper, **dadurch gekennzeichnet, dass** der Grundkörper aus einem auf Eisen basierenden Werkstoff besteht und dass der Gegenkörper eine Hartchromschicht aufweist, welche durch galvanische Abscheidung aus einem sechswertiges Chrom enthaltenden Elektrolyten gebildet ist und welche Risse aufweist, in die Hartstoffpartikel eingelagert sind, wobei die Hartstoffpartikel aus kubischem Bomitrid gebildet sind und eine mittlere Partikelgröße von 0,1 bis 0,3 µm aufweisen.

2. Tribologisches System nach Anspruch 1, **dadurch gekennzeichnet, dass** die mittlere Partikelgröße der Hartstoffpartikel in der Hartstoffschicht 0,3 µm beträgt.

3. Tribologisches System nach Anspruch 1 oder 2, **dadurch gekennzeichnet, dass** die bezogen auf die gesamte Schicht 0,5 bis 5,0 Gew.-%, bevorzugt 1,0 bis 3,0 Gew.-% Hartstoffpartikel enthält.

4. Tribologisches System nach einem der vorhergehenden Ansprüche, **dadurch gekennzeichnet, dass** die Hartchromschicht einer Abfolge von Einzellagen besteht.

5. Tribologisches System nach Anspruch 4, **dadurch gekennzeichnet, dass** die Dicke der Einzellagen 10 bis 20 µm, bevorzugt 12 bis 16 µm beträgt.

6. Tribologisches System nach einem der vorhergehenden Ansprüche, **dadurch gekennzeichnet, dass** die Schichtdicke der Hartchromschicht nach einem Bearbeitungsvorgang 50 bis 150 µm, bevorzugt 80 bis 120 µm beträgt.

7. Tribologisches System nach einem der vorhergehenden Ansprüche, **dadurch gekennzeichnet, dass** der Grundkörper aus einem Werkstoff auf der Basis von Gusseisen mit lamellarer, vermicularer oder globulitischer Graphitausbildung besteht.

8. Tribologisches System nach einem der vorhergehenden Ansprüche, **dadurch gekennzeichnet, dass** der Grundkörper aus einem Werkstoff auf der Basis von Stahl besteht.

9. Tribologisches System nach einem der vorhergehenden Ansprüche, mit einem Zylinder eines Motorblocks eines Kraftfahrzeugmotors als Grundkörper und einem Kolbenring als Gegenkörper.

10. Gegenkörper für ein tribologisches System, mit einer Hartchromschicht, welche durch galvanische Abscheidung aus einem sechswertiges Chrom enthaltenden Elektrolyten gebildet ist und welche Risse aufweist, in die Hartstoffpartikel eingelagert sind, **dadurch gekennzeichnet, dass** die Hartstoffpartikel aus kubischem Bomitrid gebildet sind und eine mittlere Partikelgröße von 0,1 bis 0,3 µm aufweisen.

11. Gegenkörper nach Anspruch 10, **dadurch gekennzeichnet, dass** die mittlere Partikelgröße der Hartstoffpartikel 0,3 µm beträgt.

12. Gegenkörper nach Anspruch 10 oder 11, **dadurch gekennzeichnet, dass** die Hartchromschicht bezogen auf die gesamte Schicht 0,5 bis 5,0 Gew.-%, bevorzugt 1,0 bis 3,0 Gew.-% Hartstoffpartikel enthält.

13. Gegenkörper nach einem der Ansprüche 10 bis 12, **dadurch gekennzeichnet, dass** die Hartchromschicht aus einer Abfolge von Einzellagen besteht.

14. Gegenkörper nach Anspruch 13, **dadurch gekennzeichnet, dass** die Dicke der Einzellagen 10 bis 20 µm, bevorzugt 12 bis 16 µm beträgt.

15. Gegenkörper nach einem der Ansprüche 10 bis 14, **dadurch gekennzeichnet, dass** die Schichtdicke der Hartchromschicht nach der galvanischen Abscheidung 100 bis 200 µm, bevorzugt 130 bis 180 µm beträgt.

16. Gegenkörper nach einem der Ansprüche 10 bis 15, **dadurch gekennzeichnet, dass** ihre Schichtdicke nach einem Bearbeitungsvorgang 50 bis 150 µm, bevorzugt 80 bis 120 µm beträgt.

## Claims

1. A tribological system comprising a main body and a counter-body, **characterized in that** the main body comprises an iron-based material and the counter-body includes a hard chrome layer, which is formed by electrodeposition of a hexavalent chromium-containing electrolyte and has cracks in which hard material particles are embedded, the hard material particles being formed of cubic boron nitride and having a mean particle size of 0.1 to 0.3 µm.

2. The tribological system according to claim 1, **characterized in that** the mean particle size of the hard material particles in the hard material layer is 0.3 µm.

3. The tribological system according to claim 1 or 2, **characterized in that**, relative to the entire layer, 0.5 to 5.0% by weight, and preferably 1.0 to 3.0% by weight, hard material particles are present.

4. A tribological system according to any one of the preceding claims, **characterized in that** the hard chrome layer is composed of a sequence of individual layers.

5. The tribological system according to claim 4, **characterized in that** the thickness of the individual layers is 10 to 20 µm, and preferably 12 to 16 µm.

6. A tribological system according to any one of the preceding claims, **characterized in that** the layer thickness of the hard chrome layer after a treatment process is 50 to 150 µm, and preferably 80 to 120 µm.

7. A tribological system according to any one of the preceding claims, **characterized in that** the main body comprises a material based on lamellar, vermicular or globular graphite cast iron.

8. A tribological system according to any one of the preceding claims, **characterized in that** the main body comprises steel-based material.

9. A tribological system according to any one of the preceding claims, comprising a cylinder of an engine block of a motor vehicle as the main body and a piston ring as the counter-body.

10. A counter-body for a tribological system, comprising a hard chrome layer, which is formed by electrodeposition of a hexavalent chromium-containing electrolyte and has cracks in which hard material particles are embedded, **characterized in that** the hard material particles are formed of cubic boron nitride and have a mean particle of 0.1 to 0.3 µm.

11. The counter-body according to claim 10, **characterized in that** the mean particle size of the hard material particles is 0.3 µm.

12. The counter-body according to claim 10 or 11, **characterized in that**, relative to the entire layer, 0.5 to 5.0% by weight, and preferably 1.0 to 3.0% by weight, hard material particles are present in the hard chrome layer.

13. A counter-body according to any one of claims 10 to 12, **characterized in that** the hard chrome layer is composed of a sequence of individual layers.

14. The counter-body according to claim 13, **characterized in that** the thickness of the individual layers is 10 to 20 µm, and preferably 12 to 16 µm.

15. A counter-body according to any one of claims 10 to 14, **characterized in that** the layer thickness of the hard chrome layer after the electrodeposition is 100 to 200 µm, and preferably 130 to 180 µm.

16. A counter-body according to any one of claims 10 to 15, **characterized in that** the layer thickness after a treatment process is 50 to 150 µm, and preferably 80 to 120 µm.

## Revendications

1. Système tribologique composé d'un corps de base et d'un corps antagoniste, **caractérisé en ce que** le corps de base est constitué d'un matériau à base de fer, et **en ce que** le corps antagoniste comporte une couche de chrome dur formée par dépôt galvanique à partir d'un électrolyte contenant du chrome hexavalent et comportant des fissures dans lesquelles sont logées des particules de matière dure, dans lequel les particules de matière dure sont constituées de nitrure de bore cubique et présentent une taille de particule moyenne de 0,1 à 0,3 µm.

2. Système tribologique selon la revendication 1, **caractérisé en ce que** la taille de particule moyenne des particules de matière dure dans la couche de matière dure est de 0,3 µm.

3. Système tribologique selon la revendication 1 ou 2, **caractérisé en ce que** la couche de chrome dur contient entre 0,5 et 5,0% en poids, de préférence entre 1,0 et 3,0% en poids de particules de matière dur, par rapport à l'ensemble de la couche.

4. Système tribologique selon l'une des revendications précédentes, **caractérisé en ce que** la couche de chrome dur est constituée d'une série de couches individuelles.

5. Système tribologique selon la revendication 4, **caractérisé en ce que** l'épaisseur des couches individuelles mesure entre 10 et 20 µm, de préférence entre 12 et 16 µm.

6. Système tribologique selon l'une des revendications précédentes, **caractérisé en ce que** suite à un traitement, l'épaisseur de couche de la couche de chrome dur mesure entre 50 et 150 µm, de préférence entre 80 et 120 µm.

7. Système tribologique selon l'une des revendications précédentes, **caractérisé en ce que** le corps de base est constitué d'un matériau à base de fonte, avec des formations lamellaires, vermiculaires ou globulitiques.

8. Système tribologique selon l'une des revendications précédentes, **caractérisé en ce que** le corps de base est constitué d'un matériau à base d'acier.

9. Système tribologique selon l'une des revendications précédentes, avec un cylindre d'un bloc moteur d'un moteur de véhicule automobile en tant que corps de base, et un segment de piston en tant que corps antagoniste.

10. Corps antagoniste pour un système tribologique, avec une couche de chrome dur formée par dépôt galvanique à partir d'un électrolyte contenant du chrome hexavalent et comportant des fissures, dans lesquelles sont logées des particules de matière dure, **caractérisé en ce que** les particules de matière dure sont constituées de nitrure de bore cubique et présentent une taille de particule moyenne de 0,1 à 0,3 µm.

11. Corps antagoniste selon la revendication 10, **caractérisé en ce que** la taille de particule moyenne des particules de matière dure est de 0,3 µm.

12. Corps antagoniste selon la revendication 10 ou 11, **caractérisé en ce que** la couche de chrome dur contient entre 0,5 et 5,0% en poids, de préférence entre 1,0 et 3,0% en poids de particules de matière dur, par rapport à l'ensemble de la couche.

13. Corps antagoniste selon l'une des revendications 10 à 12, **caractérisé en ce que** la couche de chrome dur est constituée d'une série de couches individuelles.

14. Système tribologique selon la revendication 13, **caractérisé en ce que** l'épaisseur des couches individuelles mesure entre 10 et 20 µm, de préférence entre 12 et 16 µm.

15. Corps antagoniste selon l'une des revendications 10 à 14, **caractérisé en ce qu'**après le dépôt galvanique, l'épaisseur de couche de la couche de chrome dur mesure entre 100 et 200 µm, de préférence entre 130 et 180 µm.

16. Corps antagoniste selon l'une des revendications 10 à 15, **caractérisé en ce que** suite à un traitement, l'épaisseur de couche de la couche de chrome dur mesure entre 50 et 150 µm, de préférence entre 80 et 120 µm.
